(19) Europäisches Patentamt
European Patent Office
Office européen des brevets

(11) **EP 2 590 841 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(21) Anmeldenummer: **11719523.0**

(22) Anmeldetag: **10.05.2011**

(51) Int Cl.:
***B60S 1/08*** (2006.01)

(86) Internationale Anmeldenummer:
**PCT/EP2011/057452**

(87) Internationale Veröffentlichungsnummer:
**WO 2012/004023 (12.01.2012 Gazette 2012/02)**

(54) **SCHEIBENWISCHVORRICHTUNG**

WINDSCREEN WIPER DEVICE

SYSTÈME D'ESSUIE-GLACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2010 DE 102010030961**

(43) Veröffentlichungstag der Anmeldung:
**15.05.2013 Patentblatt 2013/20**

(73) Patentinhaber: **Robert Bosch GmbH**
**70442 Stuttgart (DE)**

(72) Erfinder: **ZIMMER, Joachim**
**Changsha**
**Hunan 410100 (CN)**

(56) Entgegenhaltungen:
**WO-A1-98/29285      DE-A1- 10 144 985**
**DE-A1- 10 159 446      DE-A1-102006 050 659**
**US-A- 5 757 155**

**Beschreibung**

Die vorliegende Erfindung betrifft eine Scheibenwischvorrichtung für ein Kraftfahrzeug, mit mindestens einem Wischermotor, insbesondere einem Reversiermotor, an dem eine Motorkurbel vorgesehen ist, welche mit mindestens einem, dem Wischermotor nachgeschalteten Getriebe verbunden ist, um einen mit ihr gekoppelten Wischhebel so anzutreiben, dass er eine pendelnde Wischbewegung auf einer Windschutzscheibe des Kraftfahrzeuges ausführt, wobei der Wischermotor zur Steuerung der Wischbewegung mit einer Steuereinheit gekoppelt ist, mittels welcher eine von dem Wischermotor erzeugte Motorleistung in Abhängigkeit einer Position des Getriebes bzw. des Wischhebels auf der Windschutzscheibe veränderbar ist. Ferner betrifft die vorliegende Erfindung ein Verfahren zur Steuerung der Scheibenwischvorrichtung.

Stand der Technik

Eine solche Scheibenwischvorrichtung ist beispielsweise aus dem Dokument DE 101 44 985 A1 bekannt. Dieses Dokument offenbart ein Verfahren zur Steuerung einer Scheibenwischvorrichtung, in welchem die Motorleistung des Wischermotors in Abhängigkeit eines sich aus der Position des Getriebes ergebenden Übersetzungsverhältnisses gesteuert wird und die Motorleistung und ein auf das Getriebe bzw. den Wischhebel wirkendes Drehmoment an diese Ausführung der Wischbewegung des Wischerhebels benötigte Leistung angepasst wird. Dazu wird das von dem Wischermotor abgebbare Drehmoment zu jedem Zeitpunkt unter Berücksichtigung der Getriebeverhältnisse bestimmt und so eine Überlastung des Wischermotors beispielsweise aufgrund von Schnee oder Eis auf der Windschutzscheibe wirksam verhindert, da ein Blockieren der Scheibenwischvorrichtung aufgrund der großen zu bewegenden Massen verhindert werden kann. Besonders empfindlich auf solche Massen reagiert die Scheibenwischvorrichtung kurz vor Erreichen der Wendelagen des Wischerarms, in denen die Wischrichtung des Wischerarms sich umkehrt. In den Wendelagen ist jedoch üblicherweise ein wesentlich geringeres Moment erforderlich, um den Wischhebel anzutreiben. Bei dem bekannten Wischersystem mit elektronisch gesteuerter Drehmomentbegrenzung wird daher im Stand der Technik in den Wendelagen des Wischhebels das Drehmoment entsprechend dem Bedarf reduziert, wobei sich der Bedarf im Wesentlichen aus dem Verlauf des Übersetzungsverhältnisses des Wischergestänges bzw. des Getriebes ergibt. Aufgrund dieser Steuerung ergibt sich im Blockierfall eine reduzierte, über den Arbeitsbereich recht gleichmäßige Systembelastung.

Bei der Beschleunigung des Wischhebels bzw. der Motorkurbel aus den Wendelagen muss zusätzlich sichergestellt werden, dass genügend Leistung von dem Wischermotor bereitgestellt werden kann. Der Wischermotor muss entsprechend nach dem Reversieren möglichst schnell in Bereiche höherer Drehzahl gebracht werden.

Die Auslegung der Leistung von Wischermotoren und insbesondere deren Anzugs-Drehmomente erfolgt unter Berücksichtigung von so genannten worst case Randbedingungen wie zum Beispiel trocknende Scheibe, höchstmögliche Wischerarm-Auflagekraft o.ä. um auch in diesem Fall für einwandfreien Wischbetrieb der Scheibenwischvorrichtung zu sorgen. Dies führt zu sehr drehmomentstarken Motoren, auf deren Anzugs-Drehmoment die Dimensionierung der mechanischen Bauteile des Wischermotors bzw. des Antriebsgestänges der Scheibenwischvorrichtung und des Wischhebels bezüglich Festigkeit basieren. Dies führt unweigerlich dazu, dass die einzelnen Komponenten entsprechend groß dimensioniert werden müssen, um die Maximalkräfte auch aufnehmen zu können, was ein höheres Gewicht und höhere Kosten zur Folge hat.

Es ist daher Aufgabe der vorliegenden Erfindung, eine Scheibenwischvorrichtung bereitzustellen, deren Steuerung eine optimierte Anpassung an den tatsächlichen Drehmomentbedarf der Scheibenwischvorrichtung bei gleichzeitig minimaler Belastung des Systems ermöglicht und die gleichzeitig eine möglichst homogene pendelnde Wischbewegung des Wischhebels auf der Windschutzscheibe realisierbar macht.

Offenbarung der Erfindung

Diese Aufgabe wird erfindungsgemäß durch eine Scheibenwischvorrichtung gemäß dem Anspruch 1 sowie einem Verfahren gemäß dem Anspruch 7 gelöst.

Erfindungsgemäß verzögert die Steuereinheit zur Realisierung dynamischer Reversiervorgänge des Wischhebels aus mindestens einer der Wendelagen zur Erzeugung einer möglichst gleichförmigen Bewegung des Wischhebels auf der Windschutzscheibe eine Reduzierung der Motorleistung bis nach Beschleunigung der Motorkurbel aus den jeweiligen Wendelagen. Erst nach Erreichen der Betriebsdrehzahl des Wischermotors wird demnach eine Reduzierung der Motorleistung durch die Steuereinheit initiiert. Somit kann einer unerwünschten Verlängerung der für einen gesamten Wischzyklus des Wischhebels auf der Windschutzscheibe erforderlichen Zeitdauer entgegengewirkt werden. Würde die Motorspannung bzw. der Drehmoment des Motors deutlich vor Erreichen der Betriebsdrehzahl bereits verringert, würde dem Motor hingegen auch ohne zusätzliche Last wie Schnee und Eis während der Anlaufphase nach Durchlauf einer Wendelage die Leistung fehlen, um seine eigene Trägheit zu überwinden und auf seine gewünschte Sollgeschwindigkeit zu kommen, was ebenfalls zu einer Verzögerung des Wischzyklusses führen würde.

Vorteil der Erfindung

Mit anderen Worten kann durch die erfindungsgemäß vorgeschlagene Steuerung der Scheibenwischvorrichtung die Maximalbelastung der Scheibenwischvorrichtung in allen kritischen Blockierfällen reduziert werden. Gleichzeitig werden für den normalen Betrieb der Scheibenwischvorrichtung dynamische Reversiervorgänge realisiert.

Dies wird weiter unterstützt, indem die Elastizität des Wischers berücksichtigt wird und so eine zeitlich abgestimmte Steuerung von maximaler Motorleistung und Drehmomentreduzierung, den Bedarf die Beschleunigung und Motordrehmoment Rechnung getragen werden und gleichzeitig ein Blockierschutz bereitgestellt wird.

Als Ergebnis wird eine Scheibenwischvorrichtung mit optimiertem Beschleunigungsvermögen des Wischhebels bei gleichzeitiger Drehmomentreduzierung des Wischermotors bereitgestellt, was insbesondere die Verschleißanfälligkeit dieser Baugruppen innerhalb der Scheibenwischvorrichtung deutlich verringert. In Folge dieser Maßnahme ist somit zum Einen eine Reduzierung der Maximalbelastung der mechanischen Bauteile der Scheibenwischvorrichtung, was automatisch zu einer Kosten- und Gewichtseinsparung am Gesamtsystem führt, da hier kleinere Dimensionierungen gewählt werden können.

Beim Reversieren wird die volle Motorleistung des Wischermotors benötigt, um Motor- und Systemträgheiten schnell zu überwinden und einen möglichst harmonischen Bewegungsablauf zu realisieren. Bis zum Erreichen der Betriebsdrehzahl und damit zum Startpunkt der erfindungsgemäßen Verzögerung kann die Motorkurbel und damit auch der damit gekoppelte Wischerarm einen Winkel von typischerweise 15 bis 20° aus den Wendelagen heraus zurückliegen.

Eine besonders einfache Möglichkeit, dynamische Reversiervorgänge des Wischhebels auf der Windschutzscheibe zu erzielen, wird dadurch erreicht, dass in der Steuereinheit zur Reduzierung der Motorleistung bzw. des Drehmomentes des Wischermotors eine Drehmoment-/Leistungskennlinie abgelegt ist, die eine Annäherung an die tatsächliche Momentbedarfsgruppe darstellt. Die Reduzierung der Motorleistung des Wischermotors kann dabei beispielsweise durch Strom- bzw. Spannungsbegrenzung erfolgen.

Bei einem Blockieren der Scheibenwischvorrichtung kurz vor Erreichen einer der Wendelagen des Wischhebels treten die höchsten Belastungen in der Scheibenwischvorrichtung auf. Im ungünstigsten Falle kommt der Wischermotor zu diesem Zeitpunkt genau in Streck- bzw. in Decklage zum Stillstand, wodurch das maximale Antriebsmoment im Bereich des kleinsten Übersetzungsverhältnisses auf das Wischsystem wirkt. Um dies zu verhindern, ist in einem Ausführungsbeispiel der Wischermotor elektronisch steuerbar und verfügt über einer Positions- und Drehrichtungserkennung, welche dafür sorgt, dass die Steuereinheit kontinuierlich Daten zu der Position des Wischhebels auf der Windschutzscheibe erhält und so entsprechend der abgelegten Kennlinie den Wischermotor antreibt. Einem Zusammentreffen von Vollast und einem kurzzeitigen Stillstehen der Motorkurbel bzw. des Wischhebels in der Wendelage kann so zuverlässig entgegengewirkt werden. Ein Ausführungsbeispiel der vorliegenden Erfindung sieht vor, dass die Positions- und Drehrichtungserkennung durch mindestens eine Sensoranordnung zu realisieren.

Um eine besonders sichere Überwachung des Wischzyklusses und der Zustände der einzelnen Wischerkomponenten zu ermöglichen, ist in einem Ausführungsbeispiel vorgesehen, die Steuereinheit in allen Betriebszuständen der Scheibenwischvorrichtung betriebsbereit zu halten und die Steuereinheit bei Erkennung bereits geringer Drehzahlen des Wischermotors zu aktivieren.

Ein erfindungsgemäßes Verfahren zur Steuerung einer erfindungsgemäßen Scheibenwischvorrichtung für ein Kraftfahrzeug sieht vor, eine Kennlinie in der mindestens einen Steuereinrichtung abzulegen, welche mit dem Wischermotor gekoppelt ist, um eine von dem Wischermotor zum Antrieb der Motorkurbel erzeugten Motorleistung in Abhängigkeit einer sich aus der Position des Getriebes ergebenen Übersetzungsverhältnisses zu steuern und die Motorleistung und ein auf das Getriebe bzw. den Wischhebel wirkendes Drehmoment entsprechend dem Verlauf der Kennlinie anzupassen, wobei zur Realisierung einer möglichst homogenen pendelnden Wischbewegung des Wischhebels auf der Windschutzscheibe des Kraftfahrzeuges eine Reduzierung des Drehmomentes bzw. der Motorleistung erst nach Beschleunigung der Motorkurbel bzw. des Wischhebels aus mindestens einer der Wendelagen des Wischhebels erfolgt.

Dabei kann die Kennlinie insbesondere in den Wendelagen des Wischhebels auf der Windschutzscheibe des Kraftfahrzeuges die Trägheit des Wischermotors bzw. weiterer relevanter Komponenten der Scheibenwischvorrichtung bei der Bestimmung des vom Wischermotor auf die Motorkurbel aufzubringenden Drehmoments berücksichtigen.

Ein weiterer Faktor, der für die Bestimmung der Kennlinie der Steuereinrichtung eine Rolle spielt, ist die Elastizität der einzelnen Komponenten der Scheibenwischvorrichtung. Daher wird erfindungsgemäß vorgeschlagen, auch die Elastizität der einzelnen Komponenten bei der Abstimmung des Verlaufs der Kennlinie bzw. der Spannungsadaption zu berücksichtigen.

Beim Blockieren des Wischerarms in der Parklage und Einleitung des maximalen Motordrehmomentes erfolgt aufgrund der Elastizität der Komponenten der Scheibenwischvorrichtung ein Stillstand des Motors und somit eine Blockade des Wischersystems erst nach einer Verdrehung der Motorkurbel um typischerweise 30°, ein typischer Winkel, der notwendig ist, um im Wischsystem eine interne Belastung aufzubauen. Daraus ergibt sich, dass es sinnvoll erscheint, den Wischzyklus so zu gestalten, dass der Wischermotor zunächst mit voller Leistung anläuft und erst nach Durchschreiten des Wischwinkels die Leistung so flexibel adaptiert wird, dass in der Position der ersten möglichen Blockade das Drehmoment des Wischermotors schon auf einen geeigneten Winkel reduziert wurde. Beim Blockieren des Wischhebels nach Durchlaufen einer der Wendelagen sorgen die Elastizitäten der Komponenten der Scheibenwischvorrichtung dann dafür, dass sich die Motorkurbel noch einige Grade weiter drehen kann, im Normalfall um einen Wert zwischen 25 bis 35°, bevor der Wischermotor zum Stillstand kommt und sein maximales Anzugs-Drehmoment auf das Wischsystem wirkt. In diesem Zustand ist vorteilhafterweise das Übersetzungsverhältnis im Getriebe gegenüber dem Zustand in den Wendelagen schon wieder angestiegen, wodurch die Belastung auf das Gesamtsystem bei einer Blockade geringer wird.

Im weiteren Verlauf des Wischzyklus bietet sich an, die Motorleistung wieder zu steigern, da etwa in der Mitte des Wischfeldes aufgrund des Übersetzungsverhältnisses des Wischergestänges auch im Normalbetrieb bereits die maximale Motorleistung bzw. das maximale Motordrehmoment benötigt wird. In diesem Bereich sind eventuell auftretende Blockierkräfte allerdings vergleichsweise gering, weshalb die Dimensionierungen der einzelnen Komponenten aufgrund der optimal abgeschätzten maximal auftretenden Belastungen im Vergleich zum Stand der Technik kleiner gewählt werden können.

Hinsichtlich weiterer vorteilhafter Ausgestaltung der vorliegenden Erfindung wird auf die Unteransprüche sowie die im nachfolgenden näher erläuterten Zeichnungen verwiesen.

Kurze Beschreibung der Zeichnung

Es zeigen:

Figur 1       eine schematische Teildarstllung eines Ausführungsfbeispiels einer erfindungsgemäßen Scheibenwischvorrichtung;

Figur 2       ein Diagramm eines Drehmomentbedarf und einer Drehmomentbegrenzung über eine Winkelstellung eines Wischerarms der erfindungsgemäßen Scheibenwischvorrichtung;

Figur 3a - 3c       eine schematische Darstellung während eines Wischzyklusses einer erfindungsgemäßen Scheibenwischvorrichtung; und

Figur 4a und 4b       eine schematische Darstellung der Adaption des notwendigen Motordrehmomentes unter Berücksichtigung der Trägheit des Wischermotors.

Ausführungsform der Erfindung

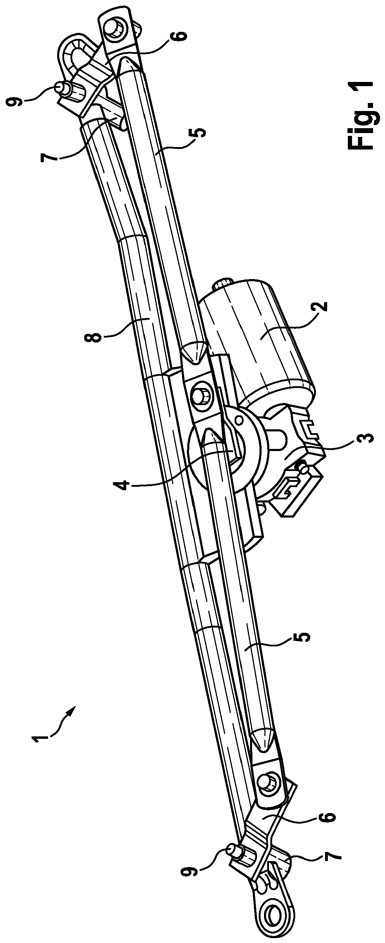

Figur 1 zeigt eine perspektivische Darstellung einer erfindungsgemäßen Scheibenwischvorrichtung 1. Die Scheibenwischvorrichtung 1 umfasst im Wesentlichen einen Wischermotor 2, der über ein nicht näher dargestelltes Getriebe 3 eine Abtriebswelle antreibt. Die Abtriebswelle ist drehfest mit einer Motorkurbel 4 verbunden, die das von ihr aufgenommene Drehmoment an zwei Schubstangen 5 weiterleitet. Die Schubstangen 5 sind an ihrem einen Ende mit dem freien Ende der Kurbel 4 drehbeweglich verbunden, an ihrem anderen Ende über eine Abtriebskurble 6 jeweils mit einem Wischerlager 7.

Die Wischerlager 7 sind wiederum über eine Rohrplatine 8 miteinander verbunden. Die Wischerlager 7 weisen jeweils eine Wischerwelle 9 auf, welche hier nicht gezeigte Wischerarme mit deren Wischerblättern tragen. Die Abtriebskurbeln 6 sind mit den Wischerlagern 7 bzw. Den Wischerwellen 9 drehfest verbunden, so dass eine Schubbewegung der Schubstangen 5 über die Abtriebskurbeln 6 an den Wischerwellen 9 in eine pendelnde Drehbewegung überführt wird.

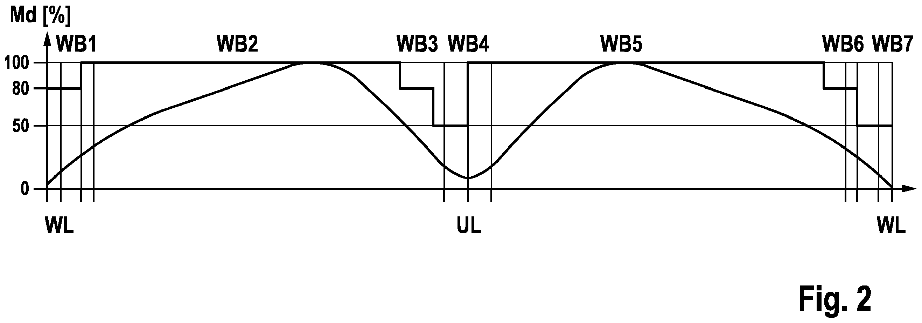

Figur 2 zeigt ein Diagramm des Drehmomentbedarfs und der Drehmomentbegrenzung der Scheibenwischvorrichtung 1 gemäß Figur 1 über die Winkelstellung eines auf einer Windschutzscheibe eines Kraftfahrzeuges laufenden Wischhebels. Die Darstellung ist entlang der x-Achse in verschiedene Abschnitte WB1 bis WB7 aufgeteilt und für jeden dieser Winkelbereiche WB1 bis WB7 ist ein eigenes Maximaldrehmoment festgelegt. Die Winkelbereiche WB1 bis WB7 sind exemplarisch zu der Auslenkung des Wischerarms auf der Windschutzscheibe des Fahrzeuges bzw. der Motorkurbel 4 der Scheibenwischvorrichtung 1 dargestellt.

Im ersten Winkelbereich WB1 bewegt sich die Motorkurbel aus der Strecklage heraus bis zu einem Winkel von beispielsweise 10 bis 20°. In diesem Bereich ist das abgebbare Drehmoment auf 80% des maximal abgebbaren Drehmomentes begrenzt.

Im zweiten Winkelbereich WB2 ist das Drehmoment auf ein eingestelltes, maximales Drehmoment begrenzt, welches 100% entsprechen soll und dem maximal von der Scheibenwischvorrichtung 1 benötigenden Drehmoment entspricht. Dieser Bereich geht deshalb über den Bereich des maximal benötigten Drehmomentes hinaus.

Im dritten Winkelbereich WB3 wird das abgebbare Drehmoment wiederum auf 80% des maximal abgebbaren Drehmoments abgesenkt.

Schließlich ist in einem vierten Winkelbereich WB4 das Drehmoment von etwa 50% des maximal abgebbaren Drehmomentes begrenzt. Dieser Bereich ist kurz vor der Umkehrlage, beispielsweise 10 bis 15° und endet mit der Umkehrlage, in der sich das Getriebe 3 bzw. die damit verbundene Motorkurbel 4 und die Schubstange 5 in Decklage befinden.

Bei Erreichen der Umkehrlage wird in diesem Beispiel das Drehmoment wiederum auf das maximal abgebbare Drehmoment begrenzt, jedoch kann auch hier erst ein reduzierter Bereich, beispielsweise 80% gewählt werden. Dieser Bereich entspricht dem fünften Winkelbereich WB5. Etwa 20 bis 30° vor Erreichen der Wendelage wird das Drehmoment im sechsten Winkelbereich WB6 wiederum auf 80% und etwa 10% vor Erreichen der Wendelage des siebten Winkelbereichs WB7 mit etwa 50% der maximal abgebbaren Drehmomentes begrenzt.

Durch Berücksichtigung des Wischergestänge-Übersetzungsverhältnisses kann die Systembelastung um etwa 30% reduziert werden. Durch Vorsehen einer Drehmomentreduzierung nach erfolgter Motorkurbelbeschleunigung aus mindestens einer der Wendlage wird eine weiter verfeinerte Adaption der benötigten Motorleistung bzw. des benötigten Drehmoments erreicht, wodurch eine Reduzierung der maximalen Systembelastung von weiteren 10% ermöglicht wird. Auch hierdurch wird eine weitere Gewichts- und Kostenreduktion erreicht.

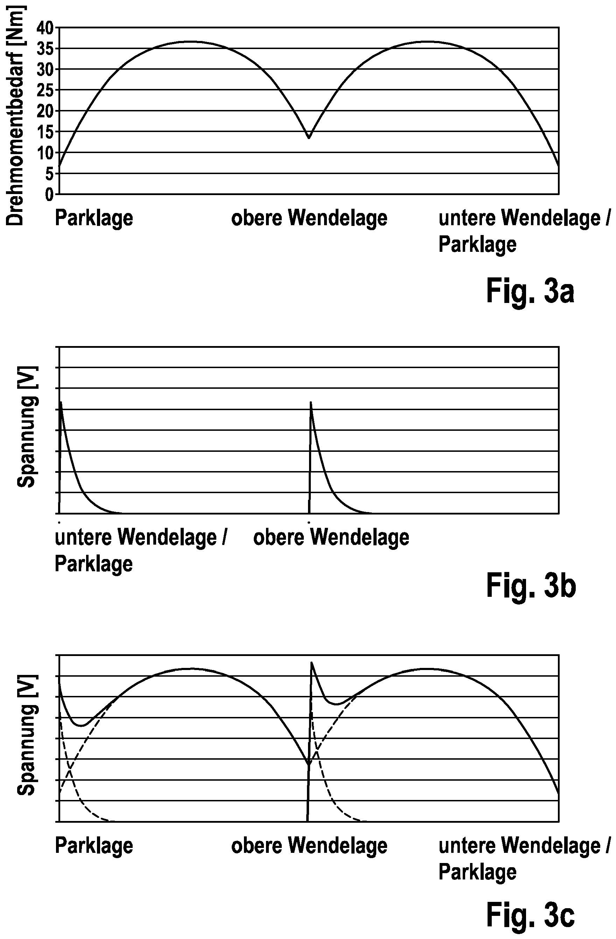

Die Figuren 3a bis c zeigen einen nach einer Drehmomentformel errechneten Drehmomentbedarf einer Scheibenwischvorrichtung mit Reversiermotor. Der Drehmomentbedarf gemäß Figur 3 wird nach der Drehmomentenformel

$$M_a = F_{Arm} \cdot L_{Arm} \cdot \mu_{max} \cdot \frac{\omega_{Abtr}}{\omega_{Mot}}$$

Er berechnet, wobei F die Armkraft, L die Wischerarmlänge und μ der Gummireibwert ist.

Der Wischhebel wird hier zunächst von der Parklage in die obere Wendelage und von der oberen Wendelage wieder in die untere Wendelage bzw. Parklage gebracht. Es handelt sich also um einen rechnerisch bestimmten Drehmomentbedarf. Nicht berücksichtigt dabei ist der in der Figur 3b gezeigte erforderliche Leistungsbedarf beim Reversiervorgang in der unteren Wendelage oder Parklage bzw. oberen Wendelage. Hier wird eine zusätzliche Spannung notwendig, um die interne Motorträgheiten in dem Reversiermotor und es Reversiermotors selbst zu überwinden, die insbesondere bei der Beschleunigung der Motorkurbel aus den Wendelagen heraus auftreten. Berücksichtigt man sowohl die in den berechneten Drehmomentbedarf als auch den Spannungsbedarf aufgrund interner Motorträgheiten ergibt sich ein Gesamtbedarf an Motorleistung bzw. Drehmoment wie in Figur 3c gezeigt. Der Spannungs-Peak in Figur 3c kann durch die Scheibenwischvorrichtung gut aufgenommen werden, da hier bei einem Blockieren die Systemlast geringer gehalten ist.

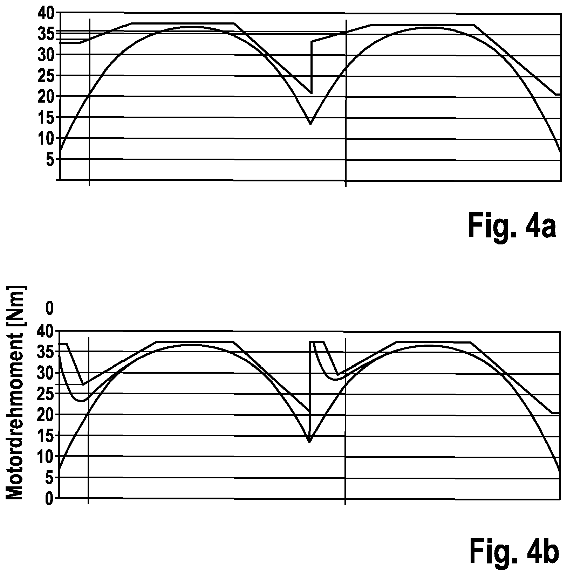

Um nun den Reversiermotor über die erfindungsgemäße Steuereinheit mit der darin abgelegten Kennlinie möglichst gut steuern zu können und möglichst nahe an den tatsächlichen Motorleistungsbedarf bzw. das notwendige Drehmoment heranzukommen, wird die in der Steuereinrichtung abgelegte Kennlinie möglichst nahe an den tatsächlichen Spannungsverlauf anzupassen. Figur 4a und 4b zeigen entsprechend eine Kennlinie für einen rein nach Drehmomentenformel berechneten Drehmomentenbedarf (Figur 4a) und eine Kennlinie, die an einer mit einem Spannungsbedarf aufgrund interner Motorträgheiten überlagerten Motorleistungsgesamtbedarf angelehnte Kennlinie (Figur 4b).

Wie aus dem Diagramm ersichtlich ist, ist es so möglich, in dem kritischen Endpositionen der Blockaden bezogen auf das Aufwärtswischen das Motordrehmoment von 33 bis 36 Nm (Figur 4a) auf 27 bis 29 Nm (Figur 4b) reduziert werden kann. Dies entspricht einer Reduktion der Systembelastung von etwa 30%. Diese Reduktion ist allein auf die Ermittlung der Kennlinie unter Berücksichtigung der Massenträgheit des Reversiermotors zurückzuführen sowie die eingesetzte elektronisch gesteuerte Drehmomentbegrenzung in den Wendelagen basierend auf der Berücksichtigung des Wischergestänge-Übersetzungsverhältnisses. Der Einsatz der Drehmomentreduzierung erst nach erfolgter Motorkurbelnbeschleunigung aus der Wendelage ermöglicht eine weiter verfeinerte Adaption der Motorleistung. Eine Reduktion der maximalen Systembelastung um weitere 10% beispielsweise durch Berücksichtigung der Elastizität der einzelnen Komponenten der Scheibenwischvorrichtung wird möglich.

**Patentansprüche**

1. Scheibenwischvorrichtung (1) für ein Kraftfahrzeug, mit mindestens einem Wischermotor (2), insbesondere einem Reversiermotor, an dem eine Motorkurbel (4) vorgesehen ist, welche mit mindestens einem, dem Wischermotor nachgeschalteten Getriebe (3) verbunden ist, um einen mit ihr gekoppelten Wischhebel so anzutreiben, dass er eine pendelnde Wischbewegung auf einer Windschutzscheibe des Kraftfahrzeuges ausführt, wobei der Wischermotor mit einer Steuereinheit gekoppelt ist, über welche eine von dem Wischermotor (2) erzeugte Motorleistung in Abhängigkeit eines sich aus der Position des Getriebes (3) ergebenden Übersetzungsverhältnisses einstellbar ist, wobei die Steuereinheit zur Realisierung dynamischer Reversiervorgänge des Wischhebels aus mindestens einer der Wendelagen zur Erzeugung einer möglichst gleichförmigen Bewegung des Wischhebels auf der Windschutzscheibe eine Reduzierung der Motorleistung bis nach Beschleunigung der Motorkurbel (4) aus den jeweiligen Wendelagen des Wischhebels bis zum Erreichen einer Betriebsdrehzahl der Motorkurbel verzögert**dadurch gekennzeichnet, dass** die Motorkurbel bis zum Erreichen der Betriebsdrehzahl einen Winkel von 15 bis 20° aus den Wendelagen heraus zurücklegt.

**2.** Scheibenwischvorrichtung (1) nach Anspruch 1, **dadurch gekennzeichnet, dass** in der Steuereinheit zur Reduzierung der Motorleistung bzw. des Drehmomentes des Wischermotors (2) eine Drehmoment-/Leistungskennlinie abgelegt ist, die eine Annäherung an die Motormomentbedarfskurve darstellt.

**3.** Scheibenwischvorrichtung (1) nach einem der 1 oder 2, **dadurch gekennzeichnet, dass** die Reduzierung der Motorleistung des Wischermotors (2) durch eine Strom- bzw. Spannungsbegrenzung erfolgt.

**4.** Scheibenwischvorrichtung (1) nach einem der vorhergehenden Ansprüche, **dadurch gekennzeichnet, dass** der Wischermotor (2) elektronisch steuerbar ist und über eine Positions- und/oder Drehrichtungserkennung verfügt.

**5.** Scheibenwischvorrichtung (1) nach einem der vorhergehenden Ansprüche, **dadurch gekennzeichnet, dass** sie mindestens eine Sensoranordnung zur Ermittlung der Position und/oder der Drehrichtung des Getriebes (3) bzw. des Wischhebels auf der Windschutzscheibe aufweist.

**6.** Scheibenwischvorrichtung (1) nach einem der vorhergehenden Ansprüche, **dadurch gekennzeichnet, dass** die Steuereinheit in allen Betriebszuständen in der Scheibenwischvorrichtung (1) betriebsbereit ist und bei Erkennung bereits geringer Drehzahlen des Wischermotors (2) aktivierbar ist.

**7.** Verfahren zur Steuerung einer Scheibenwischvorrichtung (1) für ein Kraftfahrzeug, insbesondere nach einem der Ansprüche 1 bis 6, mit mindestens einem Wischermotor (2), insbesondere einem Reversiermotor, an dem eine Motorkurbel (4) vorgesehen ist, welche mit mindestens einem, dem Wischermotor (2) nachgeschalteten Getriebe (3) verbunden ist, um einen mit ihr gekoppelten Wischhebel so anzutreiben, dass er eine pendelnde Wischbewegung auf einer Windschutzscheibe des Kraftfahrzeuges ausführt, wobei der Wischermotor (2) mit einer Steuereinheit gekoppelt ist, über welche eine von dem Wischermotor (2) erzeugte Motorleistung in Abhängigkeit eines sich aus der Position des Getriebes (3) ergebenden Übersetzungsverhältnisses eingestellt wird, um die Motorleistung und ein auf das Getriebe (3) bzw. den Wischhebel wirkendes Drehmoment an die zur Ausführung der Wischbewegung des Wischerhebels benötigte Leistung anzupassen, wobei zur Realisierung dynamischer Reversiervorgänge des Wischhebels aus dessen Wendelagen und zur Erzeugung einer möglichst gleichförmigen Bewegung des Wischhebels auf der Windschutzscheibe eine Reduzierung der Motorleistung erst nach Beschleunigung der Motorkurbel (4) bzw. des Wischhebels aus mindestens einer der Wendelagen des Wischhebels verzögert wird, bis eine Betriebsdrehzahl der Motorkurbel erreicht ist, **dadurch gekennzeichnet, dass** die Motorkurbel bis zum Erreichen der Betriebsdrehzahl einen Winkel von 15 bis 20° aus den Wendelagen heraus zurücklegt.

**8.** Verfahren zur Steuerung einer Scheibenwischvorrichtung (1) für ein Kraftfahrzeug nach Anspruch 7, **dadurch gekennzeichnet, dass** die Kennlinie in den Wendelagen des Wischhebels auf der Windschutzscheibe des Kraftfahrzeuges die Trägheit des Wischermotors (2) bei der Bestimmung des vom Wischermotor (2) auf die Motorkurbel (4) aufzubringenden Drehmomentes berücksichtigt.

**9.** Verfahren zur Steuerung einer Scheibenwischvorrichtung (1) nach Anspruch 8, **dadurch gekennzeichnet, dass** die Elastizität einzelner Komponenten der Scheibenwischvorrichtung (1) berücksichtigt werden.

## Claims

**1.** Windscreen wiper device (1) for a motor vehicle with at least one wiper motor (2), in particular a reversing motor, on which is provided a motor crank (4) which is connected with at least one gearing (3) connected downstream of the wiper motor in order to drive a wiper arm coupled therewith such that said arm executes an oscillating wiping movement on a windscreen of the motor vehicle, wherein the wiper motor is coupled with a control unit via which a motor power generated by the wiper motor (2) can be adjusted as a function of a translation ratio resulting from the position of the gearing (3), wherein in order to carry out dynamic reversing processes of the wiper arm out of at least one of the turning points, to generate as uniform a wiper arm movement as possible on the windscreen, the control unit delays a reduction in the motor power until after the motor crank (4) has accelerated out of the respective wiper arm turning points until an operating speed of the motor crank has been reached, **characterized in that** the motor crank covers an angle of 15 to 20° out of the turning points until the operating speed has been reached.

**2.** Windcreen wiper device (1) according to Claim 1, **characterized in that** to reduce the motor power or torque of the wiper motor (2), a torque/power curve is stored in the control unit which constitutes an approximation of the motor moment demand curve.

**3.** Windcreen wiper device (1) according to either of Claims 1 and 2, **characterized in that** the motor power of the wiper motor (2) is reduced by limiting the current or voltage.

4. Windcreen wiper device (1) according to any of the preceding claims, **characterized in that** the wiper motor (2) can be controlled electronically and has a position and/or rotation direction detection.

5. Windcreen wiper device (1) according to any of the preceding claims, **characterized in that** it comprises at least one sensor arrangement to determine the position and/or rotation direction of the gearing (3) or of the wiper arm on the windscreen.

6. Windcreen wiper device (1) according to any of the preceding claims, **characterized in that** the control unit is ready for operation in all operating states of the windscreen wiper device (1) and can be activated on detection of even low rotation speeds of the wiper motor (2).

7. Method for controlling a windscreen wiper device (1) for a motor vehicle, in particular according to any of Claims 1 to 6, with at least one wiper motor (2), in particular a reversing motor, on which is provided a motor crank (4) which is connected with at least one gearing (3) connected downstream of the wiper motor (2) in order to drive a wiper arm coupled therewith such that it executes an oscillating wiping movement on a windscreen of the motor vehicle, wherein the motor wiper (2) is coupled with a control unit via which a motor power generated by the wiper motor (2) can be adjusted as a function of a translation ratio resulting from the position of the gearing (3) in order to adapt the motor power and a torque acting on the gearing (3) or wiper arm to the power required to execute the wiping movement of the wiper arm, wherein in order to carry out dynamic reversing processes of the wiper arm out of its turning points and to generate as uniform a wiper arm movement as possible on the windscreen, a reduction in motor power is delayed until after the motor crank (4) or wiper arm has accelerated out of at least one of its turning points of the wiper arm, until an operating speed of the motor crank has been reached, **characterized in that** the motor crank covers an angle of 15 to 20° out of the turning points until the operating speed has been reached.

8. Method for controlling a windscreen wiper device (1) for a motor vehicle according to Claim 7, **characterized in that** in the turning points of the wiper arm on the windscreen of the motor vehicle, the curve takes into account the inertia of the wiper motor (2) in determining the torque to be applied by the wiper motor (2) to the motor crank (4).

9. Method for controlling a windscreen wiper device (1) according to Claim 8, **characterized in that** the elasticity of individual components of the windscreen wiper device (1) is taken into account.

**Revendications**

1. Système d'essuie-glace (1) pour un véhicule automobile, avec au moins un moteur d'essuie-glace (2), en particulier un moteur réversible, sur lequel il est prévu une manivelle de moteur (4) qui est reliée à au moins une transmission (3) disposée après le moteur d'essuie-glace, afin d'entraîner un bras d'essuie-glace couplé à celle-ci, de telle manière qu'il exécute un mouvement pendulaire d'essuyage sur un pare-brise du véhicule automobile, dans lequel le moteur d'essuie-glace est couplé à une unité de commande, par laquelle une puissance de moteur produite par le moteur d'essuie-glace (2) peut être réglée en fonction d'un rapport de transmission résultant de la position de la transmission (3), dans lequel, pour la réalisation d'opérations d'inversion dynamiques du bras d'essuie-glace à partir d'au moins une des positions d'inversion pour la production d'un mouvement aussi uniforme que possible du bras d'essuie-glace sur le pare-brise, l'unité de commande retarde une réduction de la puissance du moteur jusqu'après l'accélération de la manivelle du moteur (4) à partir des positions d'inversion respectives du bras d'essuie-glace jusqu'à atteindre un nombre de tours de fonctionnement de la manivelle du moteur, **caractérisé en ce que** la manivelle du moteur parcourt un angle de 15 à 20° à partir des positions d'inversion pour atteindre le nombre de tours de fonctionnement.

2. Système d'essuie-glace (1) selon la revendication 1, **caractérisé en ce qu'**une courbe caractéristique couple/puissance, qui représente une approximation de la courbe de demande de couple moteur, est mémorisée dans l'unité de commande pour la réduction de la puissance du moteur ou du couple du moteur d'essuie-glace (2).

3. Système d'essuie-glace (1) selon une des revendications 1 ou 2, **caractérisé en ce que** la réduction de la puissance de moteur du moteur d'essuie-glace (2) est effectuée par une limitation du courant ou de la tension.

4. Système d'essuie-glace (1) selon l'une quelconque des revendications précédentes, **caractérisé en ce que** le moteur d'essuie-glace (2) peut être commandé de façon électronique et est muni d'une reconnaissance de position et/ou de sens de rotation.

5. Système d'essuie-glace (1) selon l'une quelconque des revendications précédentes, **caractérisé en ce qu'**il présente au moins un dispositif de capteurs pour déterminer la position et/ou le sens de rotation de la transmission (3) ou du bras d'essuie-glace sur le pare-brise.

6. Système d'essuie-glace (1) selon l'une quelconque des revendications précédentes, **caractérisé en ce que** l'unité de commande est prête à fonctionner dans tous les états de fonctionnement dans le système d'essuie-glace (1) et peut être activée dès la détection de nombres de tours faibles du moteur d'essuie-glace (2).

7. Procédé pour commander un système d'essuie-glace (1) pour un véhicule automobile, en particulier selon l'une quelconque des revendications 1 à 6, avec au moins un moteur d'essuie-glace (2), en particulier un moteur réversible, sur lequel il est prévu une manivelle de moteur (4) qui est reliée à au moins une transmission (3) disposée après le moteur d'essuie-glace (2), afin d'entraîner un bras d'essuie-glace couplé à celle-ci, de telle manière qu'il exécute un mouvement pendulaire d'essuyage sur un pare-brise du véhicule automobile, dans lequel le moteur d'essuie-glace (2) est couplé à une unité de commande, par laquelle on règle une puissance de moteur produite par le moteur d'essuie-glace (2) en fonction d'un rapport de transmission résultant de la position de la transmission (3), afin d'adapter la puissance du moteur et un couple agissant sur la transmission (3) ou le bras d'essuie-glace à la puissance nécessaire pour l'exécution du mouvement d'essuyage du bras d'essuie-glace, dans lequel, pour la réalisation d'opérations d'inversion dynamiques du bras d'essuie-glace à partir de ses positions d'inversion et pour la production d'un mouvement aussi uniforme que possible du bras d'essuie-glace sur le pare-brise, on ne retarde une réduction de la puissance du moteur qu'après l'accélération de la manivelle du moteur (4) ou du bras d'essuie-glace à partir d'au moins une des positions d'inversion du bras d'essuie-glace, jusqu'à ce qu'un nombre de tours de fonctionnement de la manivelle du moteur soit atteint, **caractérisé en ce que** la manivelle du moteur parcourt un angle de 15 à 20° à partir des positions d'inversion jusqu'à ce qu'elle atteigne le nombre de tours de fonctionnement.

8. Procédé pour commander un système d'essuie-glace (1) pour un véhicule automobile selon la revendication 7, **caractérisé en ce que** la courbe caractéristique tient compte, dans les positions d'inversion du bras d'essuie-glace sur le pare-brise du véhicule automobile, de l'inertie du moteur d'essuie-glace (2) lors de la détermination du couple à appliquer par le moteur d'essuie-glace (2) à la manivelle du moteur (4).

9. Procédé pour commander un système d'essuie-glace (1) selon la revendication 8, **caractérisé en ce que** l'on tient compte de l'élasticité des composants individuels du système d'essuie-glace (1).

Fig. 1

EP 2 590 841 B1

**Fig. 2**

**Fig. 3a**

**Fig. 3b**

**Fig. 3c**

**Fig. 4a**

**Fig. 4b**

**IN DER BESCHREIBUNG AUFGEFÜHRTE DOKUMENTE**

**In der Beschreibung aufgeführte Patentdokumente**

• DE 10144985 A1